# FASCICULE DE BREVET EUROPEEN

(11) **EP 0 811 777 B1**
(45) Date de publication et mention de la délivrance du brevet: **25.07.2001**
(21) Numéro de dépôt: 97401274.2
(22) Date de dépôt: 06.06.1997
(51) Int. Cl.: F16C 43/06

(54) **Roulement avec conduit radial d'introduction des corps roulants**
Lager mit einem radialen Durchgang zur Einführung der Wälzkörper
Bearing with a radial passageway for the introduction of the rolling bodies

(30) Priorité: 07.06.1996 FR 9607048
(43) Date de publication de la demande: 10.12.1997
(73) Titulaire: SNR ROULEMENTS, 74010 Annecy Cédex (FR)
(72) Inventeur: Faramaz, Michel, 74290 Menthon Saint Bernard (FR); Mineur Axel, 74000 Annecy (FR)
(74) Mandataire: Fernandez, Francis

(56) Documents cités:
- FR-A- 1 274 340
- FR-A- 2 222 897
- US-A- 2 759 243
- US-A- 4 445 791
- US-A- 4 961 653
- US-A- 5 026 177

## Description

L'invention concerne un palier ou roulement notamment à corps roulants jointifs du type selon le préambule de la revendication 1 comportant une bague extérieure et une bague intérieure concentriques, munies respectivement de chemins de roulement sur lesquels roulent une pluralité de corps roulants.

Dans des roulements, il est nécessaire de prévoir un chemin d'introduction des corps roulants. Une solution consiste à prévoir, dans une des bagues, un conduit cylindrique radial que l'on vient fermer par un bouchon cylindrique dont l'extrémité en contact avec les corps roulants est usinée avec les chemins de roulement. Un montage de ce type est décrit dans le document US-A-2530660. Dans ce document, le problème de l'étanchéité est résolu de manière globale par la structure même des bagues. Néanmoins, dans le cas de bagues classiques pour lesquelles l'étanchéité du roulement est réalisée par des joints annulaires disposés en face des corps roulants, il est nécessaire d'assurer l'étanchéité du bouchon dans le chemin d'introduction des corps roulants. La solution classique consistant à monter un joint torique à l'intérieur du conduit et à la périphérie du bouchon cylindrique n'est pas satisfaisante. En effet, l'usinage des pistes de roulement et le traitement thermique entraîne une légère déformation de l'extrémité du bouchon en contact avec les corps roulants. Lors de l'enlèvement du bouchon, par exemple pour introduire les corps roulants, cette extrémité déformée vient rayer la surface du chemin d'introduction, et les rayures ainsi formées peuvent entraîner des déchirures du joint torique lors de son introduction. Le joint torique ainsi dégradé n'est plus à même d'assurer une étanchéité correcte du roulement. Une variante consiste à réaliser un chemin d'introduction et donc un bouchon en deux parties de diamètres différents, la partie de plus petit diamètre débouchant sur les chemins de roulement des corps roulants. Dans cette configuration, l'alésage axial nécessaire au passage de la goupille de fixation du bouchon est pratiqué dans la partie de plus grand diamètre pour des raisons d'accessibilité. Alors, soit l'on dispose le joint torique à la périphérie de la partie cylindrique de plus petit diamètre du chemin d'introduction avec les problèmes évoqués ci-dessus, soit l'on dispose le joint torique à la périphérie de la partie de plus grand diamètre. Dans ce dernier cas, la seule possibilité est alors de disposer le joint torique du côté de la goupille situé vers les corps roulants, car sinon l'étanchéité n'est pas assurée. Mais dans ce cas, l'intersection entre l'alésage d'insertion de la goupille et la surface intérieure du chemin d'introduction risque de déchirer le joint torique.

Le document FR 1 274 340 décrit un roulement du type selon le préambule de la revendication 1 dont le bouchon porte un graisseur et une garniture torique comprimée entre la tête du bouchon et un épaulement de l'ouverture de montage des corps roulants. Toutefois une telle forme de bouchon ne permet pas un bon contrôle du positionnement du joint torique ni maintien du bouchon en position à l'intérieur du chemin d'introduction des corps roulants.

Le dispositif selon l'invention vise à pallier cet inconvénient. A cet effet, l'invention concerne un palier ou roulement, notamment à corps roulants jointifs, comportant une bague intérieure et une bague extérieure munies respectivement de chemins de roulement sur lesquels roulent lesdits corps roulants, l'une des bagues étant munie d'un chemin radial d'introduction des corps roulants fermé par un bouchon, ledit chemin d'introduction débouchant d'une part sur les chemins de roulement et d'autre part à l'extérieur de ladite bague, tandis que le bouchon est constitué d'une première et d'une seconde parties cylindriques correspondant respectivement, par leur diamètre, aux premier et second conduits, un joint torique étant positionné entre le chemin d'introduction et me bouchon, à la jonction entre les deux parties cylindriques dudit bouchon. Le palier ou roulement est caractérisé en ce que les deux conduits cylindriques du chemin d'introduction sont réunis par un conduit intermédiaire de section continûment décroissante et que les deux parties cylindriques sont réunies par une partie intermédiaire complémentaire dudit conduit intermédiaire, une gorge périphérique étant prévue à l'intérieur du conduit intermédiaire et/ou à la périphérie de la partie intermédiaire pour le positionnement du joint torique. Cette configuration permet de protéger le joint torique contre d'éventuelles détériorations pouvant intervenir lors de son montage à l'intérieur du chemin d'introduction des corps roulants.

En outre, le palier ou roulement selon l'invention permet, grâce à l'utilisation d'un conduit intermédiaire de forme tronconique, le blocage du bouchon en position à l'intérieur du chemin d'introduction des corps roulants.

Selon une autre caractéristique de l'invention, la bague comportant le chemin d'introduction des corps roulants présente un premier alésage axial débouchant interceptant le premier conduit et le bouchon comporte, sur sa première partie cylindrique, un second alésage débouchant correspondant audit premier alésage de la bague. Ces deux alésages permettent l'introduction d'une goupille de blocage du bouchon. Les diamètres respectifs différents de la surface intérieure du premier conduit et du joint torique préservent ce dernier de toute déchirure éventuelle provoquée, lors de son montage, par les orifices du premier alésage débouchant à l'intérieur dudit premier conduit.

D'autres caractéristiques et avantages apparaîtront à la lecture de la description d'un exemple de dispositif selon l'invention, en référence aux dessins dans lesquels :
- la figure 1 montre le principe d'un roulement connu par l'art antérieur,
- la figure 2 est une vue en d'un mode de réalisation de roulement selon l'invention.

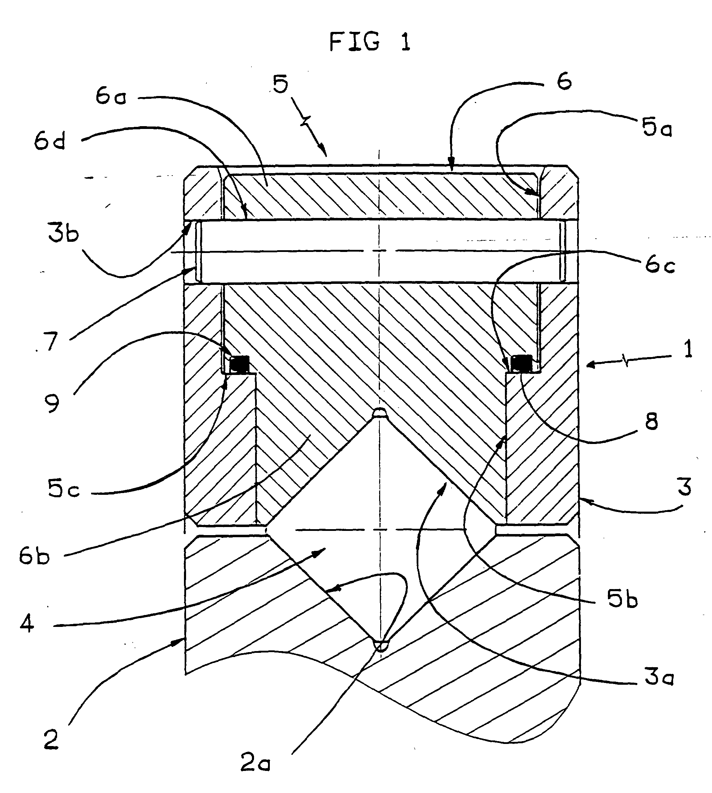

La figure 1 schématise un exemple de montage de roulement 1 connu par l'art antérieur. Le roulement 1 est constitué d'une bague intérieure 2 et d'une bague extérieure 3 munies respectivement de chemins de roulement 2a,3a sur lesquels roulent des corps roulants 4. Le roulement représenté sur la figure 1 est du type à rouleaux croisés mais il est bien clair que ce montage est applicable avec tout autre type de corps roulants, comme par exemple des billes. La bague extérieure 3 est munie d'un chemin radial 5 d'introduction des corps roulants 4, fermé par un bouchon 6, ledit chemin radial 5 étant constitué d'au moins un premier conduit cylindrique 5a débouchant à l'extérieur de la bague 3 et communiquant à travers un premier épaulement 5c avec un second conduit cylindrique 5b débouchant sur les chemins de roulement 2a,3a. Le diamètre du premier conduit 5a est choisi supérieur au diamètre du second conduit 5b. Le bouchon 6 est constitué d'une première et d'une seconde parties cylindriques 6a,6b de diamètres correspondant respectivement aux diamètres des premier et second conduits 5a,5b, lesdites première 6a et seconde 6b parties étant reliées entre elles par un second épaulement 6c. La bague 3 comportant le chemin 5 d'introduction des corps roulants 4 présente un premier alésage 3b axial débouchant qui vient intercepter le premier conduit 5a. Le bouchon 6 comporte, sur sa première partie cylindrique 6a, un second alésage 6d débouchant correspondant au premier alésage 3b de la bague 3. Les alésages 3b et 6d sont positionnés de manière à ce que, une goupille 7 étant introduite à travers lesdits alésages 3b,6d, le bouchon 6 soit positionné avec son épaulement 6c en butée contre l'épaulement 5c du chemin d'introduction 5. C'est dans cette position que l'on vient usiner l'extrémité libre de la seconde partie cylindrique 6b en même temps que la face intérieure de la bague extérieure 3 de manière à constituer le chemin de roulement 3a. A la suite de cet usinage et d'un éventuel traitement thermique, le bouchon 6 est démonté au moins une fois pour l'introduction des corps roulants 4 à l'intérieur du roulement 1. C'est à l'occasion de ce démontage que l'extrémité de la seconde partie 6b, usinée de manière à faire partie du chemin de roulement 3a, risque de venir rayer l'intérieur du second conduit 5b. L'étanchéité du chemin d'introduction 5 est assurée par un joint torique 8 qui est monté entre les deux épaulements 5c et 6c. A cet effet, on pourra prévoir à la périphérie de l'épaulement 6c une gorge annulaire 9 accueillant le joint torique 8. Le joint torique 8 et la gorge annulaire 9 seront dimensionnés de manière à ce que le diamètre dudit joint torique 8, une fois celui-ci positionné dans ladite gorge 9, soit inférieur au diamètre intérieur du premier conduit cylindrique 5a. Ainsi, le joint torique 8 qui n'est jamais en contact avec la surface rayée du second conduit cylindrique 5b ne risquera pas non plus d'être détérioré au contact de l'intersection entre la surface intérieure du premier conduit cylindrique 5a et le premier alésage 3b. En effet, la mise en place s'effectue comme suit : le joint torique 8 est enfilé autour de la seconde partie cylindrique 6b du bouchon 6 jusqu'à venir se loger dans la gorge annulaire 9 puis le bouchon 6 est introduit dans le chemin 5 d'introduction des corps roulants. Comme le diamètre du joint torique 8 est inférieur à celui dudit premier conduit 5a, il n'y a pas de contact entre ledit joint torique 8 et l'intersection entre la surface intérieure du premier conduit cylindrique 5a et le premier alésage 3b. La gorge annulaire 9 pourrait bien entendu être réalisée sur l'épaulement 5c du chemin 5 d'introduction. On pourrait également imaginer avoir une gorge sur chacun des épaulements 5c, 6c, les deux gorges étant positionnées l'une en face de l'autre.

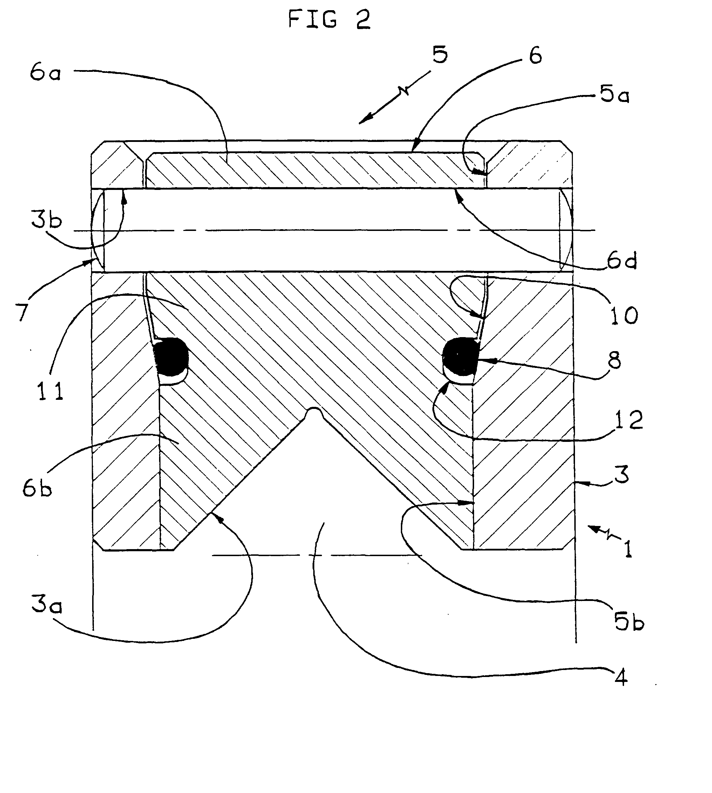

On décrira ci-après un mode de réalisation de l'invention dans laquelle les parties communes avec le montage connu de l'art antérieur portent les mêmes références. Selon ce mode de réalisation dont un exemple est représenté sur la figure 2, la liaison entre les conduits cylindriques 5a,5b n'est pas réalisée sous la forme d'un épaulement mais d'un conduit intermédiaire 10 de section continûment décroissante. De même, les deux parties cylindriques 6a,6b sont réunies par une partie intermédiaire 11 complémentaire de celle dudit conduit intermédiaire 10. Dans le cas de l'exemple représenté sur la figure 2, le conduit intermédiaire 10 et la partie intermédiaire 11 sont tronconiques mais il est clair que tout autre volume de section continûment décroissante assurant la liaison entre les deux parties cylindriques 6a,6b conviendrait également, comme par exemple une partie d'hyperboloïde. Une gorge périphérique 12 peut être prévue à l'intérieur du conduit intermédiaire 10 et /ou à la périphérie de la partie intermédiaire 11, pour le positionnement du joint torique 8. Dans le cas de l'exemple représenté sur la figure 2, la gorge périphérique 12 est disposée à la périphérie de la partie intermédiaire 11. La mise en place s'effectue de la même façon que pour le montage décrit précédemment, à savoir le joint torique 8 est enfilé par élasticité autour de la seconde partie cylindrique 6b du bouchon 6 jusqu'à venir au contact de la partie intermédiaire 11. On fait alors glisser le joint torique 8, dont le diamètre augmente par élasticité, le long de ladite partie intermédiaire 11 jusqu'à ce qu'il se positionne dans la gorge périphérique 12, puis le bouchon 6 est introduit dans le chemin 5 d'introduction des corps roulants. Comme le diamètre du joint torique 8 est inférieur à celui dudit premier conduit 5a, il n'y a pas de contact entre ledit joint torique 8 et l'intersection entre la surface intérieure du premier conduit cylindrique 5a et le premier alésage 3b.

Bien entendu, l'invention n'est nullement limitée au mode de réalisation décrit et illustré qui n'a été donné qu'à titre d'exemple. En particulier, un roulement mettant en oeuvre le même montage d'étanchéité au sein du chemin d'introduction des corps roulants prévu dans la bague intérieure dudit roulement ne sortirait pas du cadre de l'invention.

## Revendications

1. Palier ou roulement, notamment à corps roulants (4) jointifs, comportant une bague intérieure (2) et une bague extérieure (3) munies respectivement de chemins de roulement (2a,3a) sur lesquels roulent lesdits corps roulants (4), l'une des bagues (3) étant munie d'un chemin radial (5) à conduits (5a, 5b) de diamètres différents d'introduction des corps roulants (4) fermé par un bouchon (6), ledit chemin (5) d'introduction débouchant d'une part sur les chemins (2a,3a) de roulement et d'autre part à l'extérieur de ladite bague (3), tandisque le bouchon (6) est constitué d'une première et d'une seconde parties cylindriques (6a,6b) correspondant respectivement, par leur diamètre, aux premier et second conduits (5a,5b), un joint torique (8) étant positionné entre le chemin d'introduction (5) et le bouchon (6), à la jonction (6c,11) entre les deux parties cylindriques dudit bouchon, caractérisé en ce que les deux conduits cylindriques (5a,5b) du chemin (5) d'introduction sont réunis par un conduit intermédiaire (10) de section continûment décroissante et que les deux parties cylindriques (6a,6b) sont réunies par une partie intermédiaire (11) complémentaire dudit conduit intermédiaire (10), une gorge (12) periphérique étant prévue à l'intérieur du conduit intermédiaire (10) et /ou à la périphérie de la partie intermédiaire (11), pour le positionnement du joint torique (8).

2. Palier ou roulement selon la revendication 1, caractérisé en ce que la bague (3) comportant le chemin (5) d'introduction des corps roulants (4) présente un premier alésage (3b) axial débouchant, interceptant le premier conduit (5a) et en ce que le bouchon (6) comporte, sur sa première partie cylindrique (6a), un second alésage (6d) débouchant correspondant audit premier alésage (3b) de la bague (3).

## Patentansprüche

1. Lager bzw. Wälzlager, insbesondere mit aneinanderstoßenden Wälzkörpern (4), umfassend einen inneren Ring (2) und einen äußeren Ring (3), die jeweils mit Rollwegen (2a, 3a). versehen sind, auf denen die genannten Wälzkörper (4) rollen, wobei einer der Ringe (3) mit einem durch einen Pfropfen (6) verschlossenen radialen Weg (5) mit Gängen (5a, 5b) mit unterschiedlichen Durchmessern zur Einführung der Wälzkörper (4) versehen ist, wobei der genannte Einführungsweg (5) auf der einen Seite in die Rollwege (2a, 3a) und auf der anderen Seite in die Außenseite des genannten Rings (3) mündet, während der Pfropfen (6) durch einen ersten und einen zweiten zylindrischen Teil (6a, 6b) gebildet ist, die durch ihren Durchmesser dem ersten bzw. zweiten Gang (5a, 5b) entsprechen, wobei eine torische Dichtung (8) zwischen dem Einführungsweg (5) und dem Pfropfen (6) an der Verbindung (6c, 11) zwischen den beiden zylindrischen Teilen des genannten Pfropfens positioniert ist, dadurch gekennzeichnet, dass die beiden zylindrischen Gänge (5a, 5b) des Einführungswegs (5) durch einen Zwischengang (10) mit kontinuierlich kleiner werdendem Querschnitt verbunden sind und dass die beiden zylindrischen Teile (6a, 6b) durch einen Zwischenteil (11) verbunden sind, der zu dem genannten Zwischengang (10) komplementär ist, wobei im Inneren des Zwischengangs (10) und/oder an der Peripherie des Zwischenteils (11) ein peripherer Spalt (12) zur Positionierung der torischen Dichtung (8) vorgesehen ist.

2. Lager bzw. Wälzlager nach Anspruch 1, dadurch gekennzeichnet, dass der Ring (3) mit dem Weg (5) zur Einführung der Wälzkörper (4) eine erste mündende axiale Bohrung (3b) aufweist, die den ersten Gang (5a) kreuzt, und dass der Pfropfen (6) an seinem ersten zylindrischen Teil (6a) eine zweite mündende Bohrung (6d) aufweist, die der genannten ersten Bohrung (3b) des Rings (3) entspricht.

## Claims

1. A bearing or rolling bearing, in particular with contiguous rolling elements (4), comprising an inner race (2) and an outer race (3) respectively provided with raceway tracks (2a, 3a) on which said rolling elements (4) roll, one of the races (3) being provided with a radial passage (5) with conduits (5a, 5b) of different diameters for introducing the rolling elements (4), which is closed by a plug (6), said introduction passage (5) opening on the one hand at the raceway tracks (2a, 3a) and on the other hand at the exterior of said race (3) while the plug (6) is formed by first and second cylindrical parts (6a, 6b) respectively corresponding in respect of their diameter to the first and second conduits (5a, 5b), a toric seal (8) being positioned between the introduction passage (5) and the plug (6) at the junction (6c, 11) between the two cylindrical parts of said plug, characterised in that the two cylindrical conduits (5a, 5b) of the introduction passage (5) are joined by an intermediate conduit (10) of continuously decreasing section and that the two cylindrical parts (6a, 6b) are joined by an intermediate part (11) which is complementary to said intermediate conduit (10), a peripheral groove (12) being provided at the interior of the intermediate conduit (10) and/or at the periphery of the intermediate part (11) for positioning the toric seal (8).

2. A bearing or rolling bearing according to claim 1 characterised in that the race (3) comprising the passage (5) for introducing the rolling elements (4) has a first axial opening bore (3b) which intercepts the first conduit (5a) and that on its first cylindrical part (6a) the plug (6) comprises a second opening bore (6d) corresponding to said first bore (3b) in the race (3).
